# EUROPÄISCHE PATENTANMELDUNG

(11) **EP 2 607 058 A1**
(43) Veröffentlichungstag der Anmeldung: **26.06.2013**
(21) Anmeldenummer: 12197988.4
(22) Anmeldetag: 19.12.2012
(51) Int. Cl.: B29C 70/22, B29C 70/30

(54) **Rotationssymmetrisches Strukturelement in Gitterkonstruktion und Verfahren zu dessen Herstellung**

(30) Priorität: 20.12.2011 DE 102011121639
(71) Anmelder: Deutsches Zentrum für Luft- und Raumfahrt e.V., 51147 Köln (DE)
(72) Erfinder: Fink, Axel, 86609 Donauwörth (DE); Hühne, Christian, 30179 Hannover (DE); Kolesnikov, Boris, 38104 Braunschweig (DE); Niemann, Steffen, 38440 Wolfsburg (DE)
(74) Vertreter: Ahrens, Gabriele

(57) **Zusammenfassung**

Die vorliegende Erfindung betrifft ein rotationssymmetrisches Strukturelement, das insbesondere für Anwendungen mit hohen Axialdruckbelastungen geeignet ist, wobei das Strukturelement in Gitterbauweise mit Längsrippen (2) und symmetrisch entgegengesetzt angeordneten ersten und zweiten Helikalrippen (3, 4) aufgebaut ist, und die Längsrippen monolithisch aus Faserverbundwerkstoff hergestellt sind und die Helikalrippen (3, 4) in Sandwichbauweise mit Deckschichten (5, 6; 7, 8) aus Faserverbundwerkstoff ausgeführt sind.

## Beschreibung

Die vorliegende Erfindung betrifft ein rotationssymmetrisches Strukturelement aus Faserverbundwerkstoffen in Gitterbauweise. Insbesondere betrifft die vorliegende Erfindung eine faserverbund- und belastungsgerechte Bauweise für ein axialdruckbelastetes rotationssymmetrisches Strukturelement.

Die Gewichtsverringerung und gleichzeitige Minimierung der Produktionskosten stellt eine Herausforderung des Leichtbaus dar. Eine Möglichkeit der Gewichtsreduktion bietet die Gitterbauweise, insbesondere bei gleichzeitiger Verwendung von Faserverbundwerkstoffen.

Gitterversteifte Strukturelemente, üblicherweise als "Gridstrukturen" bezeichnet, sind daher insbesondere auch in der Raumfahrtindustrie verbreitet. Ein Beispiel sind rotationssymmetrische dünnwandige Leichtbaustrukturen wie zylindrische Schalen wie sie z. B. als Zwischenstücke im Raketenbau eingesetzt werden. Diese Schalen müssen hohen Axialdrücken standhalten können. Weiter müssen derartige Strukturelemente trotz ihres geringen Strukturgewichts eine hohe Eigenstabilität wie hohe spezifische Plattensteifigkeit (Biegesteifigkeit und Drillstreifigkeit) aufweisen.

Um diesen Anforderungen zu genügen, wurde eine besondere Konfiguration der Gitterkonstruktion vorgeschlagen, bei der das Gitter aus diskreten, in drei verschiedene Richtungen verlaufenden und sich kreuzenden Rippen konstruiert ist, und von einer nichtragenden Außenhaut abgedeckt sein kann.

Beispielsweise sind Gitterkonfigurationen bekannt, die aus Umfangsrippen und Helikalrippen bestehen, wobei die Helikalrippen in geodätischen Bahnen achsensymmetrisch zur Rotationsachse der Struktur in einem vorbestimmten Winkel +α bzw. -α angeordnet sind. Eine andere Konfiguration ist aus Längsrippen, die längs zur Rotationsachse angeordnet sind, und Helikalrippen in achsensymmetrischer +α und -α-Anordnung aufgebaut.

Die Umfangsrippen bzw. Längsrippen sind typischerweise bezüglich der Helikalrippen versetzt angeordnet, so dass eine Überlagerung der in drei verschiedene Richtungen verlaufenden Rippen in einem einzigen Punkt vermieden wird, und nur eine Verkreuzung von Rippen vorliegt, die in zwei Richtungen verlaufen.

Die Rippen der Gitterstruktur sind üblicherweise aus Faserverbundwerkstoffen hergestellt, wobei als Verstärkungsfasern Endlosfasern verwendet werden, die innerhalb der Harzmatrix im Wesentlichen unidirektional entlang der Ausbreitungsrichtung der Rippen ausgerichtet sind.

Es sind verschiedene Verfahren zur Herstellung von rotationssymmetrischen Strukturen aus Faserverbundwerkstoffen bekannt.

Ein Verfahren ist die Wickeltechnik wie sie z. B. Gegenstand des US-Patents 5,200,251 ist.

Hierbei werden frisch mit Matrixmaterial (Harz/Härter, ggf. Zuschläge) getränkte Faserbündel (rovings) in einem kontinuierlichen Prozess um einen Wickeldorn gewickelt. Die Außenfläche des Wickeldorns ist mit Nuten versehen, die der gewünschten Gitterstruktur entsprechen und in die die frisch mit dem Matrixmaterial getränkten Rovings lageweise während des Wickelprozesses abgelegt werden. Nach der Härtung wird der Dorn entfernt. Im Ergebnis wird eine Gitterstruktur erhalten, bei der die einzelnen Rippen aus einer Vielzahl von Faserverbund-Lagen aufgebaut sind.

Die Kreuzungspunkte von nach der Wickeltechnik hergestellten Faserverbund-Gitterstrukturen sind dadurch charakterisiert, dass abwechselnd einzelne Faserverbundlagen von Rippen, die in eine Richtung verlaufen, und Faserverbundlagen von Rippen, die in eine zweite Richtung verlaufen, abgelegt sind. Damit wird im Kreuzungspunkt oder Knoten ein alternierender Laminataufbau erhalten, der auch als "Verflechtung" bezeichnet wird. Durch die Verflechtung wird zwar eine optimale Interaktion zwischen den sich kreuzenden Rippen bewirkt, von Nachteil ist, dass zugleich der Werkstoffaufbau inhomogen wird, wobei der Faservolumengehalt in den Rippenstegen geringer ist, als der Faservolumengehalt in den Kreuzungspunkten, an denen sich die in verschiedene Richtungen orientierten Rippen kreuzen. Weiter ist der Herstellungsprozess komplex.

Ein weiteres Verfahren zur Herstellung von Gitterstrukturen aus Faserverbundwerkstoffen ist die Fibre-Placement-Technologie. Die Fibre-Placement-Technologie basiert auf der automatischen Ablage von Prepreg-Bändern aus mit noch ungehärtetem Matrixmaterial vorimprägnierten unidirektionalen Endlosfasern.

Gegenüber der Wickeltechnik hat die Fibre-Placement-Technologie die Vorteile einer besseren und reproduzierbaren Werkstoffqualität. Weiter ist eine flexiblere Gestaltung der Gitterstruktur möglich, da diskrete Bandzuschnitte abgelegt werden können. Kostenspezifische Nachteile aufgrund der niedrigen Prozessgeschwindigkeit lassen sich durch den Einsatz von parallel arbeitenden Ablageköpfen ausgleichen, wie sie z. B. in WO 01/96223 A1 beschrieben sind.

Jedoch können mit der Fibre-Placement-Technologie Gridstrukturen mit monolithischen Rippen mit Rectecksquerschnitt, insbesondere mit einem hohen Höhe/Breite-Verhältnis des Rippenquerschnitts, nur schwer hergestellt werden. Es sind spezielle Ablageköpfe erforderlich, die die Prepreg-Bänder in die entsprechend tiefen Nute der Fertigungsform definiert ablegen können.

Für die Erzielung einer möglichst großen Biege- und Drillsteifigkeit des Strukturelements sollte der Großteil der Masse der Konstruktion soweit wie möglich von der neutralen Ebene der Konstruktion entfernt sein. Diese befindet sich bei symmetrischen Schalenaufbauten, wie sie insbesondere Gegenstand der vorliegenden Erfindung sind, in der Mittelebene der Schalenkonstruktion.

Eine in Bezug auf die Massenverteilung vorteilhafte Querschnittsform der Rippen ist daher eine Doppel-T-Form, wie sie für Gridkonfigurationen aus Metall ohne Weiteres durch Fräsen erhalten werden kann.

Gitterkonstruktionen in Faserverbundbauweise, wie sie mit der Wickeltechnik oder der Fibre-Placement-Technik erhalten werden können, weisen jedoch in der Regel monolithische Rippen mit einem vollen Rechtecksquerschnitt auf, so dass hier die Masse gleichmäßig über den Querschnitt verteilt ist. Es wurden daher Versuche unternommen Querschnitte zu erzeugen, die von der Rechteckform abweichen. Jedoch lassen sich in integraler Bauweise, wie sie bei der Wickeltechnik oder der Fibre-Placement-Technik gegeben ist, kaum monolithische Rippen realisieren, die einen von der Rechtecksform abweichenden Querschnitt aufweisen.

Gridkonstruktionen aus Faserverbundwerkstoffen mit Rippen, die einen von der Rechtecksform abweichenden Querschnitt aufweisen, werden heutzutage daher üblicherweise in Differentialbauweise hergestellt, wobei zunächst die Stege und Verbindungsbereiche (Gurtbereiche) separat vorgefertigt und dann miteinander verklebt werden, so dass im Ergebnis eine Doppel-T-Querschnittsform erhalten wird.

Weiter sind hybride Konfigurationen aus metallischen Rippen und Verstärkungen aus unidirektionalem Faserverbundlaminat in den Gurtbereichen bekannt, wie sie z. B. im US-Patent 4,012,549 beschrieben sind.

Neben dem vorstehend beschriebenen Verfahren zur Herstellung von Gitterkonstruktionen aus Faserverbundwerkstoffen ist es bekannt, offene Gitterkonstruktionen in Sandwich-Bauweise aus zwei Deckschichten und einem dazwischen angeordnetem Kern herzustellen. Beispielsweise ist in US-Patent 4,052,523 eine flächige Gridstruktur beschrieben, die einen Kern mit Wabenstruktur aufweist, der mit Deckschichten aus Faserverbundwerkstoff verbunden ist, die eine entsprechende Gitterform haben. Der Kern selbst besteht aus einem Leichtmetall wie Aluminium oder einem Kunststoffmaterial.

Mit der Sandwichbauweise ist es zwar möglich die tragende Masse (die Deckschichten) von der Neutralebene entfernt zu platzieren, allerdings tritt bei Druckbeanspruchung der Effekt des Knitterns auf, welcher das maximale Spannungsniveau der Deckschichten limitiert. Weiter ist die Knickstabilität der Rippen zwischen den Knoten aufgrund der Schubnachgiebigkeit des Kerns deutlich herabgesetzt. Das Leichtbaupotential von in Sandwichbauweise hergestellten Gitterkonstruktion ist daher nur eingeschränkt.

Der vorliegenden Erfindung liegt die Aufgabe zu Grunde, die vorstehend aufgezeigten Nachteile des Standes der Technik zu lösen. Insbesondere war es Aufgabe der vorliegenden Erfindung eine Gitterkonstruktion bereit zu stellen, die eine hohe Axialdruckbelastbarkeit bei gleichzeitig hoher Gesamtstabilität der Konstruktion aufweist, ohne jedoch die Nachteile einer Gitterkonstruktion in Sandwichbauweise zu zeigen, wie ein limitiertes Spannungsniveau der Deckschichten und geringe Knickstabilität der Rippen.

Insbesondere war es Aufgabe der vorliegenden Erfindung ein rotationssymmetrisches Strukturelement in Gitterbauweise bereit zu stellen, das einer hohen Axialschubbelastung standhalten kann, zugleich eine hohe Gesamtstabilität aufweist, und aus Faserverbundwerkstoffen, vorzugsweise unter Einsatz von Prepregs, erhältlich ist.

Gelöst wird diese Aufgabe durch ein rotationsymmetrisches Strukturelement mit einer Gitterstruktur aus in drei verschiedenen Orientierungen ausgerichteten Rippen mit Längsrippen, die sich in axialer Richtung längs zur Rotationsachse des Strukturelements erstrecken, sowie ersten Helikalrippen, die in einem Winkel +α und zweiten Helikalrippen, die in einem Winkel -α, achsensymmetrisch zur Rotationsachse angeordnet sind, wobei die Längsrippen einen homogenen Materialaufbau aufweisen, und die Helikalrippen eine Sandwichbauweise aus einer oberen und unteren Deckschicht mit ggf. dazwischen angeordnetem Kern aufweisen, und wobei die Längsrippen an den Kreuzungspunkten der Rippen zwischen den oberen und unteren Deckschichten der ersten und zweiten Helikalrippen durchgeführt sind.

Weiter betrifft die vorliegende Erfindung ein Verfahren zur Herstellung des erfindungsgemäßen rotationssymmetrischen Strukturelements in Gitterbauweise, wobei in einem ersten Schritt die inneren Deckschichten der ersten und zweiten Helikalrippen auf einer Fertigungsform angeordnet werden, die eine Gestalt hat, die dem herzustellenden Strukturelement entspricht, in einem zweiten Schritt die Längsrippen auf den Kreuzungspunkten der abgelegten inneren Deckschichten platziert werden, in einem dritten Schritt ggf. das Kernmaterial zwischen den Längsrippen auf den inneren Deckschichten platziert wird, und in einem vierten Schritt die äußeren Deckschichten der Helikalrippen auf dem in den vorhergehenden Schritten 1-3 erhaltenen Aufbau deckungsgleich über den inneren Deckschichten abgelegt werden.

Die vorliegende Erfindung eignet sich insbesondere für dünnwandige Leichtbaustrukturen und insbesondere für offene Leichtbaustrukturen, wie sie zunehmend z. B. in der Luft- und Raumfahrttechnik Anwendung finden.

Das erfindungsgemäße Strukturelement kann im Prinzip eine beliebige rotationssymmetrische Gestalt haben, wie z. B. eine zylindrische oder konische Form.

Vorzugsweise hat das Strukturelement eine offene Gitterstruktur. Es kann jedoch -je nach Bedarf- eine Außen- und/oder Innenhaut aufweisen.

Die Gitterkonstruktion der vorliegenden Erfindung kann im Wesentlichen aus Faserverbundwerkstoffen aufgebaut sein. Diese bestehen aus Verstärkungsfasern, die in einer Harzmatrix eingebettet sind. Derartige faserverstärkte Kunststoffe, deren Herstellung und prinzipielle Weiterverarbeitung gehören zum Stand der Technik, so dass hier nicht näher darauf eingegangen wird, sondern auf die einschlägige Literatur verwiesen wird. Beispielhaft soll M. Flemming et al., Faserverbundbauweisen -Halbzeuge und Bauweisen, Springer Verlag, 1996 genannt werden.

Für die Herstellung von rotationssymmetrischen Strukturelementen, die eine hohe Axialdruckbelastbarkeit aufweisen sollen, werden vorzugsweise Faserverbundwerkstoffe mit unidirektional entlang des Rippenverlaufs ausgerichteten Fasern eingesetzt.

Beispiele für geeignete Faserverbundwerkstoffe sind kohlenstofffaserverstärkte Kunststoffe (CFK) und glasfaserverstärkte Kunststoffe (GFK). Für die vorliegende Erfindung können die Fasern auch aus einem anderen hierfür bekanntem Material bestehen.

Besonders bevorzugt werden für die Herstellung der erfindungsgemäßen rotationssymmetrischen Strukturelemente so genannte Prepregs eingesetzt, d. h. Halbzeuge, bei denen die Fasern mit dem noch unausgehärteten Harz vorimprägniert sind. In der Regel enthält das Harz bereits den Härter und ggf. weitere Zuschlagsstoffe. Auch Prepregs und deren Herstellung sind allgemein bekannt und insoweit wird ebenfalls auf den einschlägigen Stand der Technik verwiesen.

Es wurde gefunden, dass die erfindungsgemäße Anordnung der Rippen besonders vorteilhaft für Strukturelemente ist, die einem hohen Axialdruck ausgesetzt sind. Bei dieser Anordnung und überwiegender Axialbelastung des Strukturelements ist das Spannungsniveau in den Helikalrippen vernachlässigbar klein gegenüber dem Spannungsniveau der Längsrippen. Die Längsrippen sind daher entscheidend für die Festigkeit und Stabilität der Rippenbereiche zwischen den Kreuzungspunkten. Erfindungsgemäß ist es daher möglich, die Längsrippen und Helikalrippen unterschiedlich auszuführen, sofern ausreichende Plattensteifigkeiten gewährleistet sind.

Um einem hohen Spannungsniveau standhalten zu können, sollten die Längsrippen eine hohe Tragfähigkeit hinsichtlich Festigkeit und Stabilität aufweisen. Vorteilhafterweise sind die Längsrippen monolithisch, d. h. aus einem einheitlichen Werkstoff, und insbesondere gerade ausgeführt. Die erfindungsgemäß eingesetzten Längsrippen können daher in Längsrichtung einen optimal homogenen Werkstoffaufbau aus unidirektionalem oder einem überwiegend unidirektionalem Faserverbundlaminat aufweisen.

Die Längsrippen können eine beliebige Querschnittsform aufweisen. Sie können solide oder hohl sein. Sie können im Inneren hohle Bereiche aufweisen, die z. B. mit einem leichten Material verfüllt sein können.
Vorzugsweise ist der Querschnitt der Längsrippen über die Längenerstreckung konstant in der Form und in der Zusammensetzung.
Sie weisen keine Verflechtung mit den Helikalrippen auf und sollten vorteilhafterweise frei von Unregelmäßigkeiten wie Eindellungen und Löchern sein.
Besonders vorteilhaft in Bezug auf die Tragfähigkeit und daher bevorzugt sind monolithische Längsrippen mit Rechtecksquerschnitt oder überwiegend rechteckigem Querschnitt wie einer Trapezform.

Da bei der erfindungsgemäßen Konfiguration die Helikalrippen nur geringen Spannungen ausgesetzt sind, können sie in Sandwichbauweise ausgeführt werden. Die Helikalrippen müssen keine Axiallasten tragen, gewährleisten jedoch die erforderliche Plattensteifigkeit (Biegesteifigkeit und Drillsteifigkeit), die für die Stabilität der Gesamtkonstruktion erforderlich sind. Sie sind aus helikal angeordneten kontinuierlichen Bändern als Deckschichten und vorzugsweise einem dazwischen angeordnetem Kernmaterial aufgebaut. Insbesondere können die Helikalrippen eine geodatische Anordnung aufweisen. Vorzugsweise sind sie flach (d. h. die Höhe ist im Verhältnis zur Längenerstreckung gering) und breit (d. h. die Breite ist im Vergleich zur Höhe groß, jedoch im Vergleich zur Längenerstreckung gering).

Der Kern kann aus einem beliebigen, vorteilhafterweise leichten Material hergestellt sein. Das Material kann ein Kunststoff, aber auch ein Leichtmetall sein. Beispielsweise kann das Kernmaterial aus Schaumstoff oder einem Material in Wabenform gebildet sein. Da das Spannungsniveau, dem die Helikalrippen ausgesetzt sind, vernachlässigbar ist, bestehen keine besonderen lokalen Anforderungen, z. B. in Bezug auf Knittern oder Knicken an das Kernmaterial. Es ist daher nicht erforderlich, ein Kernmaterial auszuwählen, das diesbezüglich spezielle Eigenschaften aufweist. Es ist ausreichend, wenn das Kernmaterial den globalen Steifigkeitanforderungen genügt. Dies ermöglicht eine weitere Gewichtseinsparung.

Da die Helikalrippen, wie vorstehend ausgeführt, nur geringen Belastungen ausgesetzt sind, kann auf eine Verflechtung zwischen den Längsrippen und den Helikalrippen bzw. zwischen den Helikalrippen untereinander verzichtet werden, wie sie z. B. bei Gitterstrukturen vorliegen, die mittels Wickeltechnik erhalten werden.
Da keine Verflechtungen erforderlich sind, können die Längsrippen kontinuierlich ohne Störungen, die die Festigkeit oder Steifigkeit verringern könnten, entlang der Längsachse und im Werkstoffbau ausgeführt sein.
Weiter wird hierdurch die Bauweise beträchtlich vereinfacht.

Die Deckschichten der Helikalrippen werden oberhalb und unterhalb der Längsrippen mit einer gemeinsamen Kontaktfläche geführt, wobei die Helikalrippen und Längsrippen einen gemeinsamen Kreuzungspunkt haben. Die Helikalrippen und die Längsrippen sind an der gemeinsamen Kontaktfläche im Knotenpunkt durch eine stoffschlüssige, insbesondere flächige Fügung der Deckschichten der Helikalrippen mit der Innen- bzw. Außenstirnseite der Längsrippen physikalisch gekoppelt. Die stoffschlüssige Fügung kann wahlweise unter Einsatz eines zusätzlichen Klebefilms erfolgen.

Die physikalische Kopplung der sich kreuzenden Helikalrippen erfolgt gleichfalls durch eine stoffschlüssige, insbesondere flächige Fügung der Deckschichten. Durch die bevorzugte flache und breite Ausführung der Deckschichten der Helikalrippen steht für die physikalische Kopplung eine große Fügefläche an jedem Knoten zur Verfügung.

Bei der erfindungsgemäßen Bauweise ist es nicht erforderlich, die Längsrippen bezüglich der Kreuzungspunkte der Helikalrippen versetzt anzuordnen, wie es bei den vorstehend beschriebenen konventionellen Bauweisen der Fall ist, was wiederum zu einer Vereinfachung der Bauweise beiträgt.

Der Kern, der zwischen den Deckschichten der Helikalrippen angeordnet ist, erstreckt sich vorzugsweise kontinuierlich entlang der Stege der Helikalrippen und wird nur an den Kreuzungspunkten von den Längsrippen unterbrochen.
Da zwischen Kern und Längsrippe in der Regel keine Verbindung besteht, gibt es keine Querschubkopplung der Helikalrippen mit den Längsrippen. Bei Bedarf kann jedoch eine Querschubkopplung z. B. mittels einer Verklebung und/oder entsprechender Formgebung der Querstöße realisiert werden. Der Kern kann sich über den gesamten Stegverlauf der Helikalrippen erstrecken oder auch nur in Teilbereichen davon. Er kann aus Modulen bestehen. Gemäß einer Ausführungsform kann der Kern aus einem Kernmodul gebildet sein, das einstückig den Stegverlauf zwischen zwei benachbarten Längsrippen nachbildet.

Die dem Stegverlauf entsprechende Gestaltung eines Kernmoduls kann z. B. durch ein Trennverfahren an vollen Platten erfolgen.

Die Anzahl der Rippen ist variabel und richtet sich nach den zu erwartenden Belastungen des Strukturelements.
Auch die Größe des Winkels α ergibt sich aus den Steifkeitsanforderungen der Struktur und kann zwischen 20 und 80° liegen. Typischerweise liegt er in einem Bereich von 30 bis 60°.

Die Herstellung der erfindungsgemäßen rotationssymmetrischen Gridstruktur aus Verbundwerkstoff kann wie folgt durchgeführt werden:
Die Herstellung kann mit Hilfe einer Form erfolgen, die der Gestalt des gewünschten rotationssymmetrischen Strukturelements entspricht.
Die Form kann Stützen für die Stegbereiche der Längsrippen zwischen den Knoten aufweisen.
Zunächst werden mit Harzmaterial getränkte faserverstärkte Bänder für die Ausbildung der inneren Deckschichten der Helikalrippen in der gewünschten Orientierung und Ausrichtung auf der Form abgelegt. Eine Verflechtung der einzelnen Faserlagen ist nicht erforderlich.

Vorteilhafterweise werden zunächst die Bänder für die Deckschichten der Helikalrippen in +α-Richtung und dann die Bänder für die Deckschichten der Helikalrippen in -α-Richtung abgelegt.

Dann werden die Längsrippen auf den Kreuzungsbereichen platziert.

Zwischen den Kreuzungspunkten, d. h. zwischen den Längsrippen, können dann die Kerne oder Kernmodule auf den inneren Deckschichten abgelegt werden.

Anschließend werden mit dem Harzmaterial getränkte faserverstärkte Bänder für die äußeren Deckschichten der Helikalrippen entlang der Erstreckung der jeweiligen Helikalrippen abgelegt, wobei wiederum vorzugsweise die Deckschichten für die Helikalrippen in +α-Richtung zuerst und dann die Deckschichten für die Helikalrippen in -α-Richtung abgelegt werden.

Dann wird der gesamte Aufbau auf der Form in Vakuumfolie verpackt, versiegelt und ausgehärtet.

Die Ablage der inneren und äußeren Deckschichten für die Helikalrippen kann mittels manueller oder automatisierter Ablegeverfahren erfolgen, wie sie für die Herstellung von Gitterstrukturen aus Faserverbundwerkstoffen Stand der Technik sind.

Die Längsrippen können als vorgefertigte und bereits vollständig ausgehärtete Bauteile vorliegen.
Es ist aber auch möglich, die Längsrippen als vorimprägnierte, noch unausgehärtete Halbzeuge vorzusehen.

Für die Herstellung der Gitterstruktur können die Deckschichten in Form von "nassen" frisch mit dem Matrixmaterial imprägnierten Bändern eingesetzt werden. Bevorzugt werden jedoch Prepregs verwendet.

Werden fertig ausgehärtete Längsrippen eingesetzt, kann die Anbindung mit den Bändern der Helikalrippen durch einen co-bonding Prozess erfolgen, wobei durch das Harz der Deckschichten eine Verklebung bewirkt wird. Falls erforderlich kann ein zusätzlicher Klebstoff vorgesehen werden.

Werden dagegen als Längsrippen noch nicht ausgehärtete Halbzeuge eingesetzt, kann die Anbindung mit den Bändern der Helikalrippen mit einem cocuring Prozess, d. h. simultane Verschmelzung durch gemeinsames Aushärten, erfolgen.

Die erfindungsgemäße Bauweise ermöglicht eine Reihe fertigungsspezifischer Vorteile:
Da vorgefertigte und damit eigenstabile Längsrippen eingesetzt werden können, ist eine seitliche Abstützung und Kompatkierung der Rippen nicht erforderlich. Zudem werden sie von dem Kernmaterial der Helikalrippen gehalten. Da die auszuhärtenden Bänder für die Deckschichten vorzugsweise flach, breit und dünn sind, kommt im Wesentlichen nur eine Kompaktierung in Radialrichtung zum Tragen.

Es können Längsrippen eingesetzt werden, die in einem kontinuierlichen Prozess, wie z. B. einem herkömmlichen Pultrusionsverfahren, vorgefertigt werden können.

Es kann auf Führungsnuten und komplexe Ablageköpfe, wie sie für konventionelle Fibre-Placement-Prozesse und Bauweisen erforderlich sind, verzichtet werden.

Da das Material für die Deckschichten der Helikalrippen im Wesentlichen in die Breite und nicht in die Tiefe abzulegen ist, und zudem bereits vorgefertigte Längsrippen eingesetzt werden können, lassen sich hohe Materialauftragsraten und folglich geringe Fertigungszeiten für das Strukturelement erhalten. Im Folgenden wird die vorliegende Erfindung anhand von in den angeführten Figuren dargestellten Ausführungsbeispielen näher erläutert. Es zeigen:
- **Figur 1**: als Beispiel für ein erfindungsgemäßes rotationssymmetrisches Strukturelement eine Zylinderschale;
- **Figur 2**: eine Explosionsdarstellung eines Ausschnitts der Zylinderschale nach Figur 1;
- **Figur 3**: eine Seitenansicht der Zylinderschale nach Figur 1;
- **Figur 4**: eine schematische Darstellung des in Figur 3 markierten Knotenbereiches;
- **Figur 5**: die Ansicht durch Schnitt A-A des Knotenbereichs gemäß Figur 4;
- **Figur 6**: eine alternative Ausführungsform für einen Knotenbereich gemäß Figur 5;
- **Figur 7**: eine alternative Ausführungsform einer Längsrippe; und
- **Figur 8**: eine weitere alternative Ausführungsform einer Längsrippe.

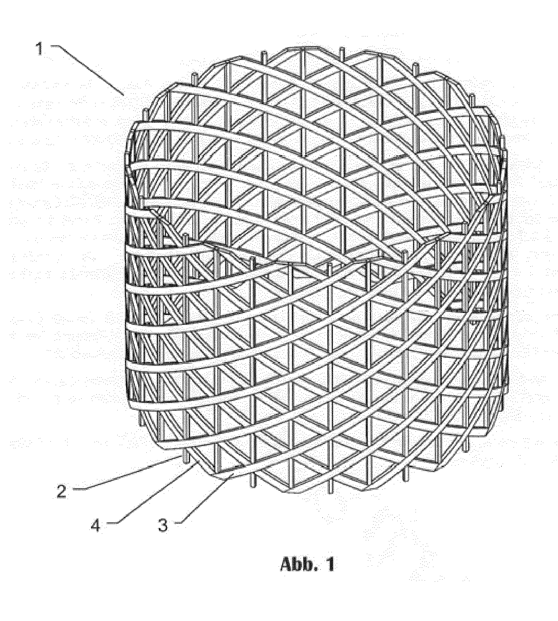

Als ein Beispiel für eine konkrete Anwendungsform für ein erfindungsgemäßes rotationssymmetrisches Strukturelement in Gitterbauweise ist in Figur 1 eine Zylinderschale 1 gezeigt. Solche Zylinderschalen werden häufig als Zwischenstufe in der Raketentechnik eingesetzt und sind daher hohen Axialdruckbelastungen ausgesetzt.

Die Gitterkonstruktion ist aus Längsrippen 2, ersten Helikalrippen 3 und zweiten Helikalrippen 4 aufgebaut.

Deutlich erkennbar sind die in drei Orientierungen ausgerichteten Rippen der Gitterkonstruktion.

Die Längsrippen 2 sind entlang des Umfangs längs zur Rotationsachse der Zylinderschale angeordnet. Die ersten Helikalrippen 3 verlaufen helikal gegen den Uhrzeigersinn und die zweiten Helikalrippen 4 im Uhrzeigersinn um den Umfang der Zylinderschale 1 herum. Aus der Figur ist erkennbar, dass die Längsrippen 2 an den Kreuzungspunkten (Knoten) der Rippen durch die ersten und zweiten Helikalrippen 3, 4 hindurch verlaufen. Weiter ist erkennbar, dass die sich kreuzenden Rippen dreieckige offene Zellen einschließen.

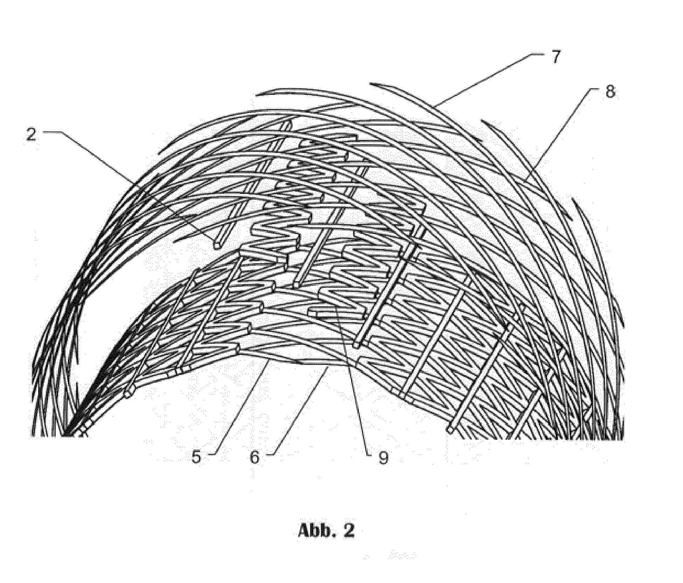

Figur 2 zeigt eine Explosionsdarstellung eines Umfangabschnitts der Zylinderschale 1 zur Verdeutlichung des bevorzugten inneren Aufbaus der Zylinderschale. Zu erkennen sind die Bänder für die inneren Deckschichten 5, 6 der Helikalrippen 3, 4 und die Bänder für die äußeren Deckschichten 7, 8 der Helikalrippen. Auf den Kreuzungspunkten der inneren Deckschichten 5 und 6 sind die Längsrippen 2 abgelegt. Weiter ist jeweils zwischen zwei benachbarten Längsrippen 2 ein Kernmodul 9 vorgesehen. Das Kernmodul 9 hat eine Form, die dem Helikalrippenmuster zwischen den beiden benachbarten Längsrippen entspricht, die hier zwischen zwei benachbarten Längsrippen einen zickzackartigen Verlauf haben. In der gezeigten Ausführungsform erstrecken sich die Module 9 entlang der gesamten Längenerstreckung des Strukturelements.

Oberhalb der Module 9 sind die Bänder für die äußeren Deckschichten 7 und 8 entlang des Verlaufs der korrespondierenden inneren Deckschichten auf der Konstruktion angeordnet.

Die Längsrippen 2 sind hier vorgefertigte Profile mit rechteckiger Querschnittsform.
Alternativ können jedoch auch Längsrippenhalbzeuge aus Prepregs verwendet werden.

Wie aus Figur 2 deutlich hervorgeht, sind die Längsrippen 2 und die Kernmodule 9 zwischen den inneren Deckschichten 5 und 6 und den äußeren Deckschichten 7 und 8 der Helikalrippen 3 und 4 angeordnet. Die Längsrippen sind entlang der Rotationsachse des Strukturelements in Richtung der Axialbelastung ausgerichtet. Da sie an den Knoten zwischen den Deckschichten hindurchgeführt werden, können die Längsrippen homogen und kontinuierlich ausgeführt sein, so dass sie den hohen Kompressionsdrücken, die auftreten können, widerstehen können.

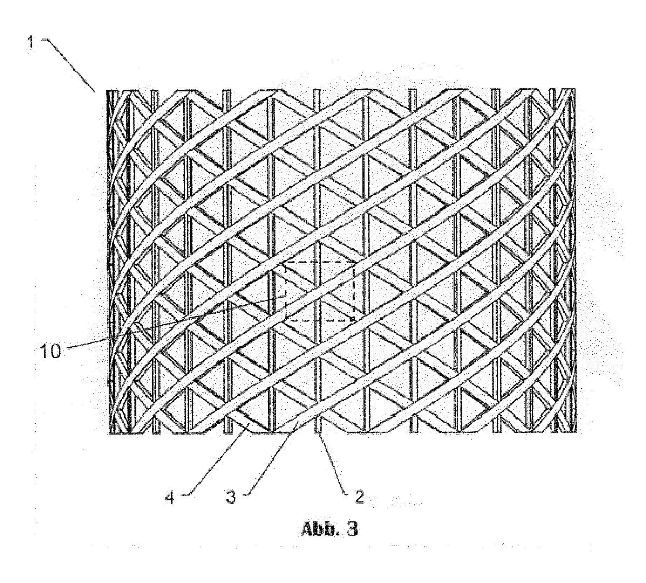

Figur 3 zeigt eine Seitenansicht der Zylinderschale 1 von Figur 1, wobei ein Knotenbereich 10 gekennzeichnet ist, in dem sich die in drei verschiedene Orientierungen ausgerichteten Rippen 2, 3 und 4 überkreuzen.

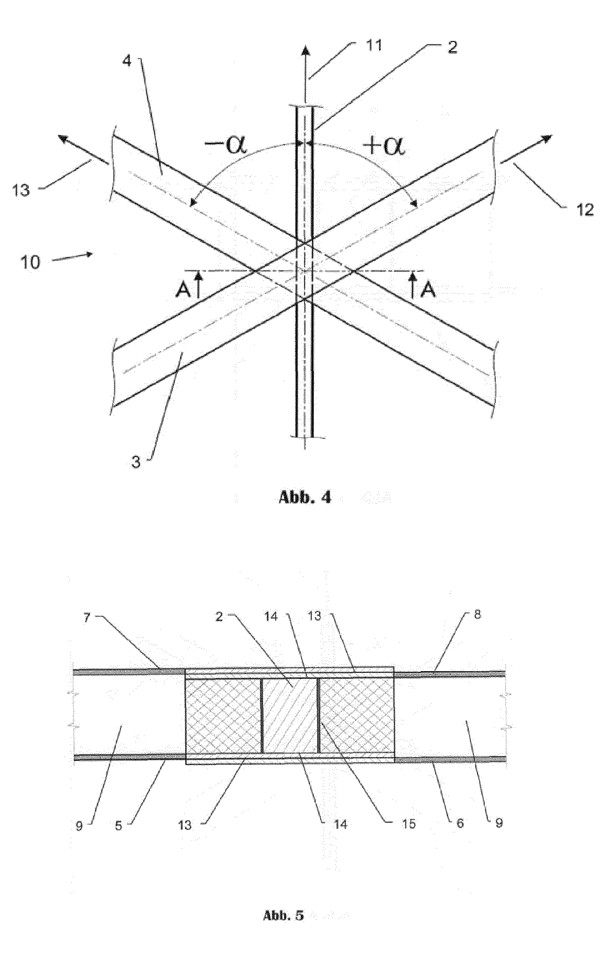

Eine Detailansicht des Knotenbereiches 10 zeigt Figur 4. In Figur 4 ist insbesondere die Orientierung der Helikalrippen 3 und 4 verdeutlicht. Zu erkennen ist die Längsrippe 2, die in Richtung 11 ausgerichtet ist, die Helikalrippe 3, die in Richtung 12 in einem Winkel +α zur Richtung 11 der Längsrippe 2 ausgerichtet ist, und die Helikalrippe 4, die in Richtung 13 in einem Winkel -α zur Richtung 11 der Längsrippe 2 ausgerichtet ist.

Bezogen auf einen Knoten sind die Helikalrippen 3 und 4 achsensymmetrisch zu der kreuzenden Längsrippe 2 bzw. zur Rotationssachse des Strukturelements angeordnet, wobei der Winkel α hier jeweils 60° beträgt.

In Figur 5 ist eine Schnittansicht durch die Linie A-A des Knotenbereichs 10 gemäß Figur 4 gezeigt.

Zu sehen sind die innere Deckschicht 5 und die äußere Deckschicht 7 der zweiten Helikalrippe 4, sowie die innere Deckschicht 6 und die äußere Deckschicht 8 der ersten Helikalrippe 3. Zwischen den inneren und äußeren Deckschichten 5, 6 und 7, 8 befindet sich ein Kernmodul 9. Die Deckschichten 5 und 8 liegen unmittelbar auf der Längsrippe 2 an der Kontaktfläche 14, und die Deckschichten 6 und 7 auf den Deckschichten 5 bzw. 8 an der Kontaktfläche 13 zwischen den Deckschichten. Weiter ist ein Kontaktbereich 15 zwischen zwei Kernmodulen 9 und der Längsrippe 2 gezeigt. Die Kernmodule 9 und die Längsrippe 2 sind hier voneinander entkoppelt, d. h. es besteht keine Anbindung zwischen den Stoßflächen. Sie können jedoch auch miteinander gekoppelt sein, indem zwischen den Stoßflächen eine Verbindung erzeugt wird, beispielsweise eine Klebeverbindung.

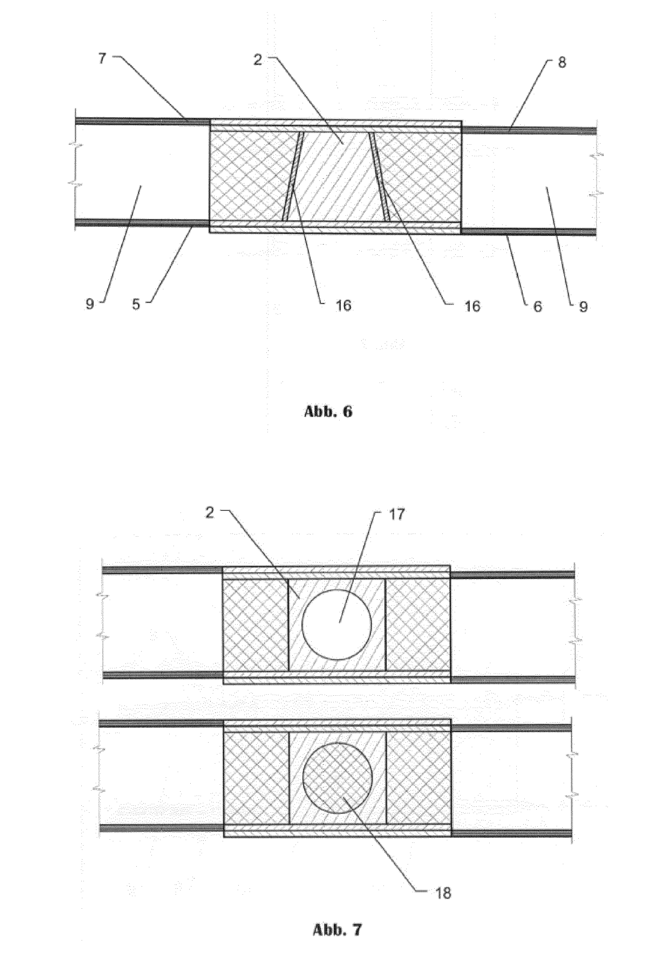

Die Längsrippe 2 kann auch eine von der Rechtecksform abweichende Querschnittsform aufweisen. Ein Beispiel hierfür ist in Figur 6 gezeigt.

So zeigt Figur 6 einen Schnitt durch einen Knotenbereich 10 eines erfindungsgemäßen Strukturelementes 1 mit Längsrippen 2 mit trapezförmigen Querschnitt. Wie in Figur 5 ist die Längsrippe 2 massiv ausgeführt. In der hier gezeigten Ausführungsform ist die Längsrippe 2 mit den Kernmodulen 9 über eine Klebeverbindung 16 gekoppelt. Durch die trapezförmige Ausbildung der Längsrippe 2 lässt sich eine bessere Kompaktierung des Klebstoffes erzielen.

Eine weitere alternative Ausführungsform der Längsrippen 2 ist in Figur 7 gezeigt. Die hier gezeigte Längsrippe 2 ist hohl. Die Längsrippe 2 selbst hat eine rechteckige Querschnittsform, der innere Hohlraum 17 dagegen eine Kreisform. Der Hohlraum 17 kann jedoch auch jede andere Querschnittsform aufweisen. Zudem kann er mit einem Füllmaterial 18 verfüllt sein wie in Figur 7 gezeigt.

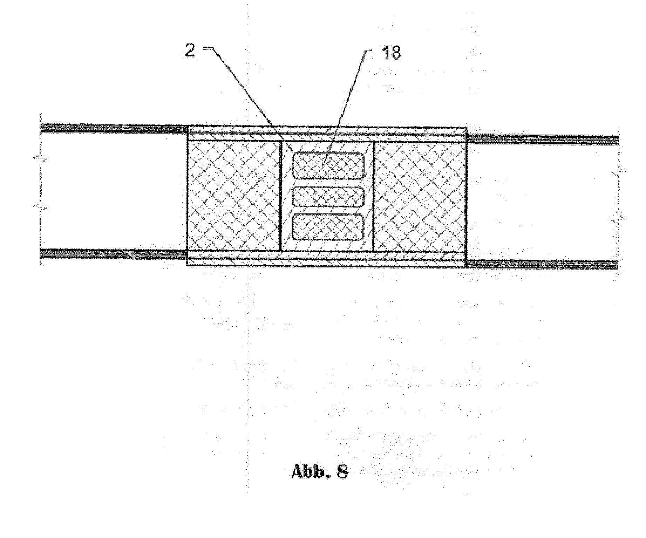

Eine weitere alternative Ausführungsform für eine Längsrippe 2 ist in Figur 8 gezeigt. Die Längsrippe 2 ist hier ein Profilelement mit drei nebeneinander angeordneten Hohlräumen 18. Die Längsrippe 2 sowie die Hohlräume 18 weisen jeweils eine rechteckige Querschnittsform auf. Es versteht sich, dass die Hohlräume 18 jede andere beliebige Querschnittsform aufweisen können. Zudem könnend die Hohlräume ganz oder teilweise mit einem Füllmaterial 18 verfüllt sein.

Die vorliegende Erfindung löst die Nachteile der konventionellen monolithischen Bauweise einerseits und der konventionellen Sandwichbauweise andererseits bei der Herstellung von Strukturelementen in Gitterbauweise durch einen Mischbauweise aus monolithischen einheitlich und kontinuierlich aufgebauten Längsrippen, die einem hohen Spannungsniveau standhalten könnten, und Helikalrippen in Sandwichbauweise, die die für die Gesamtstabilität notwendige Plattensteifigkeit gewährleisten können.

### Bezugszeichenliste

- 1: rotationssymmetrisches Strukturelement
- 2: Längsrippe
- 3: Helikalrippe (+α, Gegenuhrzeigersinn)
- 4: Helikalrippe (-α, Uhrzeigersinn)
- 5: innere Deckschicht (der Helikalrippe 4)
- 6: innere Deckschicht (der Helikalrippe 3)
- 7: äußere Deckschicht (der Helikalrippe 4)
- 8: äußere Deckschicht (der Helikalrippe 3)
- 9: Kernmodul
- 10: Knotenbereich
- 11: Orientierung der Längsrippe 2
- 12: Orientierung der Helikalrippe 3
- 13: Kontaktfläche der Deckschichten 5, 6 und 7, 8
- 14: Kontaktfläche der Deckschichten 5 und 8 mit Längsrippe 2
- 15: Stoßfläche zwischen Kernmodul 9 und Längsrippe 2
- 16: Klebefilm
- 17: Hohlraum in Längsrippe 2
- 18: Füllmaterial in Hohlraum 17

## Patentansprüche

1. Rotationssymmetrisches Strukturelement (1), insbesondere axialdruckbelastetes rotationssymmetrisches Strukturelement, mit einer Gitterstruktur, wobei die Gitterstruktur aus Rippen aufgebaut ist, die in drei verschiedene Richtungen orientiert sind, mit Längsrippen (2), die entlang der Rotationsachse ausgerichtet sind, und ersten Helikalrippen (3), die in einem Winkel +α und zweiten Helikalrippen (4), die in einem Winkel -α zu den Längsrippen (2) ausgerichtet sind,
wobei die Längsrippen (2) homogen aus Faserverbundwerkstoff hergestellt sind,
die Helikalrippen (3, 4) einen Sandwichaufbau mit Deckschichten (6, 8; 5, 7) aus Faserverbundwerkstoff aufweisen,
wobei die Längsrippen (2) an den Kreuzungspunkten (10) der Rippen zwischen den inneren und äußeren Deckschichten (5, 6; 7, 8) der Helikalrippen (3, 4) hindurchgeführt sind,
und ggf. zumindest in Teilbereichen entlang der Stege der Helikalrippen (2, 3) ein Kern (9) zwischen den Deckschichten vorgesehen ist.

2. Rotationssymmetrisches Strukturelement nach Anspruch (1),
wobei die Längsrippen (2) kontinuierlich mit konstantem und ungestörten Profilquerschnitt hergestellt sind.

3. Rotationssymmetrisches Strukturelement nach Anspruch 1 oder 2,
wobei die Längsrippen (2) eine homogene Werkstoffkonfiguration in Längsrichtung aufweisen.

4. Rotationssymmetrisches Strukturelement nach einem der vorhergehenden Ansprüche,
wobei die Längsrippen (2) massive Profile oder Hohlprofile sind.

5. Rotationssymmetrisches Strukturelement nach Anspruch 4,
wobei die Längsrippen (2) Hohlprofile sind, die ganz oder teilweise mit einem Füllmaterial (18) verfüllt sind.

6. Rotationssymmetrisches Strukturelement nach einem der vorhergehenden Ansprüche,
wobei zwischen benachbarten Längsrippen (2) Kerne (9) vorgesehen sind, die zwischen den inneren und äußeren Deckschichten der Helikalrippen (3, 4) angeordnet sind und deckungsgleich dazu verlaufen.

7. Rotationssymmetrisches Strukturelement nach Anspruch 6,
wobei zwischen zwei benachbarten Längsrippen (2) ein Kernmodul (9) vorgesehen ist, das eine Form hat, die dem Verlauf der Helikalrippen (3, 4) zwischen den benachbarten Längsrippen (2) entspricht.

8. Rotationssymmetrisches Strukturelement nach einem der Ansprüche 1 bis 7, das eine zylindrische oder konische Schale ist.

9. Verwendung eines rotationssymmetrischen Strukturelements nach einem der Ansprüche 1 bis 8, in Anwendungen mit hoher Axialdruckbelastung.

10. Verfahren zur Herstellung eines rotationssymmetrischen Strukturelements nach einem der Ansprüche 1 bis 8,
wobei in einem ersten Schritt die inneren Deckschichten (5, 6) der ersten und zweiten Helikalrippen (3, 4) auf der Oberfläche einer Form, die der Gestalt des herzustellenden Strukturelements entspricht, abgelegt werden, in einem zweiten Schritt die Längsrippen (2) auf die Kreuzungsbereiche (10) aufgelegt werden,
ggf. in einem dritten Schritt der Kern (9) zwischen den Längsrippen (2) auf die inneren Deckschichten (5, 6) der Helikalrippen (3, 4) abgelegt wird,
in einem vierten Schritt die äußeren Deckschichten (7, 8) der Helikalrippen (3, 4) deckungsgleich zu den inneren Deckschichten (5, 6) auf dem Aufbau abgelegt werden,
wobei die äußeren und inneren Deckschichten (7, 8; 5, 6) aus frisch mit Matrixmaterial getränktem Fasermaterial oder aus mit Matrixmaterial vorimprägniertem Fasermaterial aufgebaut werden,
und in einem fünften Schritt der in den vorhergehenden Schritten erhaltene Aufbau ausgehärtet wird.

11. Verfahren nach Anspruch 10,
wobei vorgefertigte und bereits ausgehärtete Längsrippen (2) eingesetzt werden.

12. Verfahren nach Anspruch 10,
wobei Längsrippen (2) eingesetzt werden, die aus noch nicht ausgehärteten Prepregs hergestellt sind.

13. Verfahren nach einem der Ansprüch 10 bis 12,
wobei ein Faserverbundmaterial eingesetzt wird, in dem die Fasern unidirektional in Richtung des Rippenverlaufs ausgerichtet sind.
